# EUROPEAN PATENT APPLICATION

(11) **EP 3 395 772 A1**
(43) Date of publication of application: **31.10.2018**
(21) Application number: 16878814.9
(22) Date of filing: 21.12.2016
(51) Int. Cl.: C03C 1/02, A61J 1/05, C03C 3/083, C03C 3/085, C03C 3/087, C03C 3/091, C03C 4/20

(54) **MIXED MATERIAL FOR SILICATE GLASS AND METHOD FOR MANUFACTURING TUBE GLASS USING SAME**

(30) Priority: 25.12.2015 JP 2015253109
(71) Applicant: Nippon Electric Glass Co., Ltd., Otsu-shi, Shiga 520-8639 (JP)
(72) Inventor: KATO Tsutomu, Otsu-shi Shiga 520-8639 (JP); KIMURA Miki, Otsu-shi Shiga 520-8639 (JP)
(74) Representative: Henkel, Breuer & Partner
(86) International application number: PCT/JP2016/088216
(87) International publication number: WO 2017/110927

(57) **Abstract**

A mixed raw material for a silicate glass, capable of suppressing the development of a heterogeneous layer on the surface of a glass melt, and a method for manufacturing a tube glass using the same are provided.

A mixed raw material for a glass of the present invention is a mixed raw material for a silicate glass, including at least a silica sand and a feldspar, in which with respect to the silica glass, a D₅₀ value is 100 µm or more and 300 µm or less, the uniformity represented by a value obtained by dividing a D₆₀ value by a D₁₀ value is less than 2.0, and with respect to the feldspar, a D₅₀ value of is 100 µm or more and 400 µm or less, and the uniformity represented by a value obtained by dividing a D₆₀ value by a D₁₀ value is 1.5 or more and less than 4.0. The mixed raw material for a silicate glass is melted and formed into a tube shape.

## Description

### Technical Field

The present invention relates to a mixed raw material for a silicate glass, capable of suppressing a heterogeneous layer on the surface of a glass melt, and a method for manufacturing a tube glass using the same.

### Background Art

A method for obtaining a glass product by melting a mixed raw material for a glass in a melting furnace, supplying the melt to a forming apparatus and continuously forming is generally used in glass manufacturing.

The mixed raw material for a glass supplied to the inside of the melting furnace is heated by combustion of a burner from the upper side, and melted. The glass melt is sometimes supplementally heated by supplying a current to the glass melt by an electrode provided at the bottom of the melting furnace.

A silica sand and a feldspar that are natural minerals are often used in raw materials used in a mixed raw material for a glass, for example, raw materials used in a tube glass, from the standpoint of costs and solubility, and components insufficient in those natural minerals are generally supplemented by chemical products such as boric acid and soda ash. Each of the above raw materials used is a crushed and classified material.

The raw materials after crushing and classifying are mixed and prepared so as to achieve a target composition for glass manufacturing. The mixed raw material for a glass thus prepared is fed into a melting furnace, and melted therein. In the case of forming a tube glass, the resulting melt is supplied to a forming apparatus called a sleeve and continuously formed.

### Citation List

### Patent Document

Patent Document 1: JP-A-2003-040641

### Summary of the Invention

### Problems that the Invention is to Solve

In melting a raw material for a glass, a heterogeneous layer having a composition different from a target glass is sometimes generated on the surface of a glass melt in a melting furnace. The heterogeneous layer is often due to heterogeneity by segregation (component segregation) of each of raw materials constituting a mixed raw material for a glass to be place in a melting furnace or difference (melting segregation) of a melting rate of each of raw materials constituting the mixed raw material for a glass.

When the heterogeneous layer generated on the surface of a glass melt develops, the layer hinders homogenization of the glass melt and deteriorates productivity. Therefore, the heterogeneous layer should be suppressed as much as possible. In other words, once density difference is generated in the glass melt by the development of the heterogeneous layer and the like, homogenization is difficult, and additionally the density difference causes bubbles generated in association with the difference of a composition. As a result, stable production cannot be expected. Furthermore, in the manufacturing of a tube glass, the development of the heterogeneous layer affects dimensional accuracy of the tube glass and variation in wall thickness of the tube glass.

Conventionally the heterogeneous layer developed on the surface of a glass melt has often been suppressed by adjusting melting conditions. The reason for this is that the melting conditions can directly respond to every state of the glass melt, and the result is easy to be reflected.

Furthermore, in the actual manufacturing, the inside of the glass melting furnace is affected by melting conditions and outside air, and it is difficult to accurately investigate the factor of generation of the heterogeneous layer on the surface of the glass melt apart from the influence of the mixed material for a glass. For this reason, it was considered difficult to optimize the mixed material for a glass.

An object of the present invention is to provide a mixed raw material for a silicate glass, capable of suppressing a heterogeneous layer on the surface of a glass melt, and a method for manufacturing a tube glass using the same.

### Means for Solving the Problems

As a result of intensive investigations, the present inventors have found that a heterogeneous layer is easy to develop on the surface of a glass melt in a melting furnace in actual manufacturing as the degree of heterogeneity of the glass melt by component segregation and melting segregation of the mixed raw material for a glass is large.

The degree of heterogeneity of a glass melt can be evaluated by melting a desired mixed raw material for a glass in a Pt triangular crucible, gradually cooling the resulting melt, and measuring density difference between the top and the bottom of the glass sample obtained.

As a result of intensive experiments using the above evaluation method, the present inventors have further found that it is effective to strictly control a particle size of at least silica sand and feldspar in order that component segregation and melting segregation of the mixed raw material for a silicate glass do not occur.

Specifically, in the present invention, in addition to an average particle size D₅₀ value of each of raw materials, the uniformity obtained by dividing a D₆₀ value by a D₁₀ value where the values are obtained from a cumulative distribution curve of a particle size is optimized. In other words, the average particle size D₅₀ value is a rough indication of an average particle size of the raw materials, and the uniformity is a rough indication of the distribution width of a particle size of the raw materials. In the present invention, the particle size distribution of raw materials was measured using a sieving method.

Patent Document 1 describes a case example that solubility may be improved by optimizing the relationship of particle sizes of the respective raw materials using an average particle size D₅₀ value as a rough indication. However, as described above, each of raw materials constituting a mixed raw material for a glass has a specific particle size distribution, and it is not sufficient to merely combine those raw materials using only the average particle size D₅₀ value as an index in a mixed raw material for a glass in which plural kinds of raw materials should be combined.

Therefore, a mixed raw material for a glass according to the present invention is a mixed raw material for a silicate glass including at least a silica sand and a feldspar, in which with respect to the silica sand, a D₅₀ value is 100 µm or more and 300 µm or less, a uniformity represented by a value obtained by dividing a D₆₀ value by a D₁₀ value is less than 2.0, and in which with respect to the feldspar, a D₅₀ value is 100 µm or more and 400 µm or less, and the uniformity represented by a value obtained by dividing a D₆₀ value by a D₁₀ value is 1.5 or more and less than 4.0.

In the present invention, the "feldspar" means a raw material containing a feldspar such as an albite, a potassium feldspar and an anorthite in the total amount of 50% or more, and is present in various forms on the earth. For example, the plagioclase is a feldspar raw material in which the albite and the anorthite were dissolved in solid. A weathered granite constituted of a potassium feldspar, an albite and the like, further constituted of a quartz, a slight amount of a mica and the like, and generally called "Saba" is also effective as a feldspar raw material in the present invention.

The mixed raw material for a silicate glass preferably further includes a boric acid, wherein with respect to the boric acid, a D₅₀ value is 100 µm or more and 500 µm or less, and a uniformity represented by a value obtained by dividing a D₆₀ value by a D₁₀ value is 1.5 or more and less than 4.0.

The mixed raw material for a silicate glass preferably further includes a borax, wherein with respect to the borax, a D₅₀ value is 200 µm or more and 700 µm or less, and a uniformity represented by a value obtained by dividing a D₆₀ value by a D₁₀ value is 2.5 or more and less than 6.0.

The mixed raw material for a silicate glass preferably further includes a soda ash, wherein with respect to the soda ash, a D₅₀ value is 200 µm or more and 400 µm or less, and a uniformity represented by a value obtained by dividing a D₆₀ value by a D₁₀ value is 1.5 or more and less than 3.0.

Further, a method for manufacturing a tube glass according to the present invention preferably includes melting the mixed raw material for a silicate glass and forming the resulting melt into a tube shape.

In the method for manufacturing a tube glass, it is preferable that the mixed raw material for a silicate glass is prepared so as to contain, in mass % on an oxide basis,70.0 to 77.0% of SiO₂, 4.5 to 11% of Al₂O₃, 0 to 11.5% of B₂O₃, 0 to 3.5% of Li₂O, 3.0 to 8.5% of Na₂O, 0 to 5.5% of K₂O, and 0 to less than 4.0% of MgO+CaO.

The method for manufacturing a tube glass is preferably used in manufacturing of a pharmaceutical tube glass.

### Mode for Carrying Out the Invention

A mixed raw material for a silicate glass may contain a silica sand, a feldspar, a boric acid, a borax, a soda ash and the like, and above all, the silica sand and the feldspar occupy a greater part of the mixed raw material. Therefore, for the suppression of a heterogeneous layer on the surface of a glass melt, it is effective to strictly regulate particle sizes of those components, thereby inhibiting the generation of component segregation and melting segregation of two components of the silica sand and the feldspar as much as possible.

With respect to the silica sand, a D₅₀ value is 100 µm or more, and preferably 110 µm or more, or 120 µm or more. The D₅₀ value is 300 µm or less, and particularly preferably 280 µm or less, or 260 µm or less. A uniformity represented by a value obtained by dividing a D₆₀ value by a D₁₀ value is 1.1 or more, and particularly preferably 1.2 or more, or 1.3 or more. The uniformity is less than 2.0, and particularly preferably less than 1.9, or less than 1.8.

With respect to the feldspar, a D₅₀ value is 100 µm or more, and preferably 110 µm or more, or 120 µm or more. The D₅₀ value is 400 µm or less, and particularly preferably 380 µm or less, or 360 µm or less. A uniformity represented by a value obtained by dividing a D₆₀ value by a D₁₀ value is 1.5 or more, and particularly preferably 1.7 or more, or 1.9 or more. The uniformity is less than 4.0, and particularly preferably less than 3.8, or less than 3.6.

When the D₅₀ values of the silica sand and the feldspar are too small, dust generation and scattering in a furnace are easy to occur, and additionally it is disadvantageous in the cost when manufacturing in many cases. On the other hand, when the D₅₀ values of the silica sand and the feldspar are too large, homogeneity in the mixed raw material for a silicate glass is deteriorated, and additionally the melting rate decreases, leading to the development of a heterogeneous layer on the surface of a glass melt by component segregation and melting segregation of the mixed raw material for a silicate glass. When the uniformities of the silica sand and feldspar are too large, the content of fine particles and coarse particles increases, leading to the development of a heterogeneous layer on the surface of a glass melt. Once density difference is generated in the glass melt by the development of the heterogeneous layer, homogenization is difficult, and additionally the density difference causes bubbles generated in association with the difference of a composition. As a result, stable production cannot be expected. On the other hand, when the uniformities of the silica sand and the feldspar are too small, it is disadvantageous in production cost.

With respect to the boric acid, a D₅₀ value is preferably 100 µm or more, 130 µm or more, or 160 µm or more, and the D₅₀ value is preferably 500 µm or less, 470 µm or less, or 440 µm or less. A uniformity represented by a value obtained by dividing a D₆₀ value by a D₁₀ value is preferably 1.5 or more, 1.7 or more, or 1.9 or more, and the uniformity is preferably less than 4.0, less than 3.8, or less than 3.6.

With respect to the borax, a D₅₀ value is preferably 200 µm or more, 230 µm or more, or 260 µm or more, and the D₅₀ value is preferably 700 µm or less, 670 µm or less, or 640 µm or less. A uniformity represented by a value obtained by dividing a D₆₀ value by a D₁₀ value is preferably 2.5 or more, 2.8 or more, or 3.1 or more, and the uniformity is preferably less than 6.0, less than 5.7, or less than 5.4.

In the case of using the soda ash, a D₅₀ value is preferably 200 µm or more, 220 µm or more, or 240 µm or more, and the D₅₀ value is preferably 400 µm or less, 380 µm or less, or 360 µm or less. A uniformity represented by a value obtained by dividing a D₆₀ value by a D₁₀ value is preferably 1.5 or more, 1.6 or more, or 1.7 or more, and the uniformity is preferably less than 3.0, less than 2.9, or less than 2.8.

When the D₅₀ values of boric acid, borax and soda ash are too small, the respective raw materials and the mixed raw material for a silicate glass are easy to solidify, and are difficult to feed into a furnace without delay. When the D₅₀ value of each raw material is too large, the uniformity in the mixed raw material for a silicate glass is deteriorated, and in addition to this, the melting rate decreases, leading to the development of a heterogeneous layer on the surface of a glass melt by component segregation and melting segregation of the mixed raw material for a silicate glass. When the uniformity of each raw material is too large, the content of fine particles and coarse particles increases, leading to the development of a heterogeneous layer on the surface of a glass melt. Once density difference is generated in the glass melt by the development of the heterogeneous layer, homogenization is difficult, and additionally the density difference causes bubbles generated in association with the difference of a composition. As a result, stable production cannot be expected. When the uniformity of each raw material is too small, it is disadvantageous in production cost.

Other than the silica sand, feldspar, boric acid, borax and soda ash described above, various raw materials may be added to the mixed raw material for a silicate glass in the present invention for the purpose of fining, color tone control and the like. The proportion of those raw materials occupied in the mixed raw material for a silicate glass is generally 2 mass% or less, and the influence giving to dissolution behavior may be almost ignored. Therefore, raw materials having a particle size outside the claimed range may be used.

As the means for falling granules of minerals or chemical products within a predetermined particle size distribution range, a crushing step of Jaw crusher, ball mill, roller mill or the like and a classification step of sieve, air classification or the like may be used in combination, and other than this, particles obtained by granulating a powder fine particles by pressurization, self-granulation or the like may be used. In the granulated raw materials, particle size and particle size distribution of the granulated particles (secondary particles) are subject to the present invention.

When the mixed raw material for a silicate glass of the present invention is used, the cost of glass production is suppressed and solubility is maintained, and in addition to those, component segregation of the mixed raw material for a silicate glass once mixed is suppressed, the melting rate of each of raw materials at the time of melting in an initial stage is optimized, and the development of a heterogeneous layer generated on the surface of a glass melt may be suppressed. As a result, melting environment is stabilized and high productivity may be enjoyed.

The mixed raw material for a silicate glass in the present invention is preferably provided in manufacturing of a pharmaceutical tube glass as described hereinafter, but is not limited to this use.

A method for manufacturing a tube glass using a mixed raw material for a silicate glass in the present invention is described below. The method for manufacturing a tube glass according to the present invention preferably includes melting the mixed raw material for a silicate glass and forming the resulting melt into a tube shape. The following description is an example using Danner process.

The raw materials are mixed so as to achieve a target composition, thereby obtaining a mixed raw material for a silicate glass. The preferred target composition is described hereinafter.

The mixed raw material for a silicate glass is continuously fed into a melting furnace of 1550 to 1700°C, melted and fined. While winding the glass melt obtained on a rotating refractory, a glass is drawn out into a tube shape from the top of the refractory while blowing air from the top of the refractory. The tubular glass drawn out is cut into a predetermined size to obtain a tube glass.

The tube glass of the present invention may be manufactured by not only Danner process, but the conventional optional processes. For example, Velo process and downdraw process are effective processes as the method for manufacturing a tube glass of the present invention.

Further, the method for manufacturing a tube glass of the present invention is preferably used in manufacturing of a pharmaceutical tube glass.

Examples of the pharmaceutical tube glass include pharmaceutical containers such as an ampoule, a vial and a syringe. The present invention may be used in the manufacturing of a tube glass other than a pharmaceutical tube glass, and may be used in, for example, the manufacturing of a tube glass for lightening, electronic component or the like.

The pharmaceutical container is generally obtained as a final product at customer's end by reheating a tube glass as an intermediate product, and sealing the bottom or forming it into an ampoule shape. In such as case, when dimensional accuracy of a tube glass is poor or a wall thickness is not uniform, excess reheating and deformation are required at customer's end in order to form a target shape.

The excess reheating and deformation not only lead to deterioration of productivity at customer's end and cost escalation, but also have the possibility of causing volatilization of glass components. Therefore, when such a tube glass is used in a pharmaceutical container, elution of glass components into a liquid medicine, deterioration of strength of the pharmaceutical container, and the like are concerned.

On the other hand, in the tube glass manufactured by the manufacturing method using the mixed raw material for a silicate glass of the present invention, a heterogeneous layer developing on the surface of a glass melt is suppressed in the course of the manufacturing, and melting environment is stable. For this reason, even when formed into a tube glass, dimensional accuracy is particularly excellent and a wall thickness is uniform. Therefore, it is not necessary to add excess reheating and deformation at customer's end, and therefore it says that even when used in a pharmaceutical container, elution of glass components into a liquid medicine and deterioration of strength of a pharmaceutical container are difficult to occur.

As a pharmaceutical tube glass, for example, raw materials are preferably mixed so as to contain, in mass% on an oxide basis, 70.0 to 77.0% of SiO₂, 4.5 to 11% of Al₂O₃, 0 to 11.5% of B₂O₃, 0 to 3.5% of Li₂O, 3.0 to 8.5% of Na₂O, 0 to 5.5% of K₂O, and 0 to less than 4.0% of MgO+CaO.

The reason for limiting the glass composition as above is described below. In the following description, unless otherwise indicated, % representation means mass%.

SiO₂ is one of components constituting a glass network. The content of SiO₂ is 70.0 to 77.0%, preferably 70.0 to 76.0%, 70.0 to 75.5%, 70.5 to less than 75.5%, and 71.0 to less than 75.0%, or particularly 72.0 to 74.7%. When the content of SiO₂ is too small, chemical durability is deteriorated, and acid resistance required in a pharmaceutical tube glass is deteriorated. On the other hand, when the content of SiO₂ is too large, the liquidus viscosity decreases, making it easy to devitrify in the manufacturing process, and productivity is deteriorated.

Al₂O₃ is a component suppressing devitrification of a glass and enhancing chemical durability and hydrolytic resistance. The content of Al₂O₃ is 4.5 to 1]%, preferably 5.1 to less than 11%, 5.5 to 10.0%, 6.3 to 9%, more than 6.3 to 8.5%, more preferably 6.4 to 8.3%, or still more preferably 6.4 to 8.0%. When the content of Al₂O₃ is too small, the effect described above is not achieved. On the other hand, when the content of Al₂O₃ is too large, the viscosity of a glass increases, and the working temperature increases. As a result, the evaporation amount of B₂O₃, Na₂O and the like increases in converting into a pharmaceutical container.

B₂O3 has the effect of not only decreasing the melting point of a glass, but increasing the liquidus viscosity and suppressing devitrification. For this reason, the content of B₂O₃ is 0 to 11.5%, preferably more than 0 to 11.5%, 0.01 to less than 11.5%, 0.03 to 11.3%, 0.1 to 11.2%, 0.5 to 11.1%, more preferably 3 to 11.0%, or still more preferably 5.5 to less than 11.0%. When the content of B₂O₃ is too small, the working temperature increases. As a result, the evaporation amount of B₂O₃, Na₂O and the like increases in converting into a pharmaceutical container. On the other hand, when the content of B₂O₃ is too large, hydrolytic resistance and chemical durability are deteriorated.

Li₂O has the effect of decreasing the viscosity of a glass and increasing the linear thermal expansion coefficient. However, addition of Li₂O makes easy to corrode a refractory when melting the glass. The addition further leads to production cost escalation. For this reason, the content of Li₂O is 0 to 3.5%, 0 to 3.0%, 0 to 2.0%, 0 to 1.0%, 0 to 0.5%, 0 to 0.2%, preferably 0 to 0.1%, more preferably 0 to 0.05%, or still more preferably 0 to 0.01%. Alkali metal oxides other than Li₂O are desirably used unless there are special circumstances.

Similar to Li₂O, Na₂O has the effect of decreasing the viscosity of a glass and increasing the linear thermal expansion coefficient. The content of Na₂O is 3.0 to 8.5%, preferably 3.5 to 8.5% and 4.0 to less than 8.5%, more preferably 4.0 to 8.0%, and still more preferably 4.0 to 7.0%. When the content of Na₂O is too small, working temperature increases. As a result, evaporation amount of B₂O₃, Na₂O and the like increases in converting into a pharmaceutical container. On the other hand, when the content of Na₂O is too large, hydrolytic resistance is deteriorated.

Similar to Li₂O and Na₂O, K₂O has the effect of decreasing a viscosity of a glass and increasing a linear thermal expansion coefficient. The content of K₂O is 0 to 5.5%, preferably more than 0 to 5%, 0.1 to 5%, more preferably 0.5 to 4.5%, still more preferably 1.0 to 3%, or particularly 1.5 to 3.0%. When the content of K₂O is too large, hydrolytic resistance is deteriorated.

When K₂O and Na₂O are concurrently used, hydrolytic resistance is enhanced by mixed alkali effect, and this is desirable. To enhance hydrolytic resistance, the value of K₂O/Na₂O in mass ratio is 0 to 1, preferably more than 0 to 0.99, 0.05 to 0.95, 0.1 to 0.9, 0.2 to 0.85, more preferably 0.20 to 0.8, still more preferably 0.2 to 0.75, or particularly 0.2 to 0.7. When the ratio is small, hydrolytic resistance is deteriorated. On the other hand, when the ratio is large, the working temperature increases, and the evaporation amount of B₂O₃, Na₂O and the like increases in converting into a pharmaceutical container.

The total content of Li₂O, Na₂O and K₂O is 5 to 13%, preferably 5 to 12.5%, 5.5 to 10%, or particularly 6 to 9%. When the total content of those components is small, the working temperature increases. On the other hand, when the total content of those components is large, chemical durability and hydrolytic resistance are deteriorated.

MgO has the effect of decreasing the high temperature viscosity of a glass. MgO further has the effect of enhancing chemical durability. The content of MgO is 0 to 3.0%, preferably 0 to 2.0%, 0 to 1.0%, 0 to less than 1.0%, or particularly preferably 0 to 0.5%. When the content of MgO is too large, hydrolytic resistance is deteriorated.

CaO has the effect of decreasing high temperature viscosity of a glass. The content of CaO is 0 to 4.0%, preferably 0 to 2.0%, 0 to 1.5%, 0 to 1.0% and 0 to less than 1.0%, and particularly preferably 0 to 0.5%. When the content of CaO is too large, hydrolytic resistance is deteriorated.

MgO+CaO is the total content of MgO and CaO, and is an important index in adjusting the high temperature viscosity and hydrolytic resistance of a glass to preferred ranges. MgO+CaO is 0 to 4.0%, preferably 0 to 3.0%, 0 to 2.0%, 0 to 1.0%, 0 to less than 1.0%, or particularly preferably 0 to 0.5%. When MgO+CaO is too large, the high temperature viscosity of the glass may be decreased, but hydrolytic resistance of the glass is deteriorated.

In the present invention, other than the above components, various components may be added.

SrO has the effect of enhancing chemical durability. The content of SrO is 0 to less than 4.0%, preferably 0 to 2.0%, or more preferably 0 to 1.0%. When the content of SrO is too large, hydrolytic resistance is deteriorated.

TiO₂ has the effect of enhancing hydrolytic resistance. The content of TiO₂ is 0 to less than 7.0%, preferably 0 to 5.0%, more preferably 0 to 4.0%, or still more preferably 0 to 1.5%. When the content of TiO₂ is too large, the working temperature increases, and the evaporation amount of B₂O₃, Na₂O and the like is increased when converting into a pharmaceutical container.

ZrO₂ has the effect of enhancing hydrolytic resistance. The content of ZrO₂ is 0 to less than 7.0%, preferably 0 to 5.0%, more preferably 0 to 4.0%, still more preferably 0 to 1.5%, 0 to 1.0%, 0 to less than 1.0%, or particularly 0 to 0.5%. When the content of ZrO₂ is too large, the working temperature increases, and the evaporation amount of B₂O₃, Na₂O and the like is increased when converting into a pharmaceutical container.

Fe₂O₃ may color a glass and decrease the transmittance in a visible region. Therefore, the content thereof is 0.2% or less, preferably 0.1% or less, or more preferably 0.02% or less.

At least one of F, Cl, Sb₂O₃, SnO₂, SO₃ and the like may be contained as a fining agent. The total content of those fining agents is 3% or less, preferably 1% or less, or more preferably 0.5% or less. Of those fining agents, Cl and SnO₂ are preferably used for the standpoints of environmental aspect, the melting temperature and less harmful influence to human bodies. When Cl is used, the content thereof is 3% or less, preferably 1% or less, or particularly 0.2% or less. When SnO₂ is used, the content thereof is 2% or less, or preferably 0.5% or less.

The content of BaO is preferably 0 to 2.0%, 0 to 1.5%, 0 to 1.0%, or 0 to less than 1.0%. When BaO is contained in a glass composition, there is the possibility that crystals are precipitated by the reaction with an alumina refractory and the reaction of Ba ions eluted from the glass with sulfate ions in a liquid medicine, and precipitates are generated as described above. For this reason, it is more preferred in the present invention that BaO is not substantially contained.

The tube glass manufactured by the manufacturing method of the present invention preferably has the following properties, and when the mixed raw material has the composition as described above, the following properties are easy to be obtained.

In the glass grains test of the hydrolytic resistance test according to EP 8.0, the consumption of 0.02 mol/L hydrochloric acid per unit glass mass is preferably 0.040 mL or less, 0.036 mL or less, 0.030 mL or less, 0.028 mL or less, 0.026 mL or less, or particularly 0.025 mL or less. When the consumption of hydrochloric acid is too large, elution of glass components, particularly alkali metal components, greatly increases when a pharmaceutical container such as an ampoule or a vial has been manufactured, filled with a liquid medicine and stored, and there is a possibility of causing alternation of liquid medicine components.

In the acid resistance test according to DIN 12116, the mass loss per unit area is preferably 1.0 mg/dm² or less, 0.8 mg/dm² or less, 0.7 mg/dm² or less, particularly less than 0.7 mg/dm², or 0.6 mg/dm² or less. The mass loss increases, elution of glass components greatly increases when a pharmaceutical container such as an ampoule or a vial has been manufactured, filled with a liquid medicine and stored, and there is a possibility of causing alternation of liquid medicine components.

The working temperature is preferably 1130 to 1260°C and 1140 to 1250°C, more preferably 1150 to 1240°C, or particularly 1160 to 1230°C. When the working temperature is too high, the converting temperature in manufacturing a pharmaceutical container such as an ampoule or a vial from a tube glass increases, and the evaporation amount of B₂O₃ and alkali metal oxides in the glass greatly increases. The working temperature used herein means a temperature at which the viscosity of a glass reaches 10^{4.0} dPa·s.

The liquidus viscosity is preferably 10^{4.5} dPa·s or more, 10^{5.0} dPa·s or more, 10^{5.2} dPa·s or more, 10^{5.4} dPa·s or more, or particularly 10^{5.6} dPa·s or more. When the liquidus viscosity is low, devitrification is easy to occur when forming a glass tube by Danner process, and productivity is deteriorated.

The linear thermal expansion coefficient is an important parameter in thermal shock resistance of a glass. In order that a glass has sufficient thermal shock resistance, the linear thermal expansion coefficient in a temperature range of 30 to 380°C is preferably 58×10⁻⁷/°C or less, or particularly 48 to 55×10⁻⁷/°C.

### Examples

The present invention is described below based on examples.

Table 1 shows Examples (Sample Nos. 1 to 5) of the present invention and Comparative Examples (Sample Nos. 6 to 9).

**Table 1**

| | Silica Sand | Soda feldspar | Weathered granite | Boric acid | Borax | Soda ash | Glass density difference |
|---|---|---|---|---|---|---|---|
| Mixing amount (g) | 38.7 | 17.7 | 29.3 | 11.6 | 6.0 | 2.7 | |
| Sample No. 1 | | | | | | | 0.002 |
| D₅₀ value | 120 | 110 | 200 | 320 | 310 | 280 | |
| Uniformity | 1.6 | 2.0 | 1.8 | 2.0 | 2.8 | 1.7 | |
| Sample No. 2 | | | | | | | 0.001 |
| D₅₀ value | 200 | 230 | 120 | 280 | 680 | 220 | |
| Uniformity | 1.7 | 1.8 | 1.9 | 3.0 | 4.8 | 2.3 | |
| Sample No. 3 | | | | | | | 0.022 |
| D₅₀ value | 120 | 110 | 200 | 580 | 310 | 280 | |
| Uniformity | 1.6 | 2.0 | 1.8 | 3.9 | 2.8 | 1.7 | |
| Sample No. 4 | | | | | | | 0.020 |
| D₅₀ value | 120 | 110 | 200 | 320 | 790 | 280 | |
| Uniformity | 1.6 | 2.0 | 1.8 | 2.0 | 2.5 | 1.7 | |
| Sample No. 5 | | | | | | | 0.012 |
| D₅₀ value | 120 | 110 | 200 | 320 | 310 | 380 | |
| Uniformity | 1.6 | 2.0 | 1.8 | 2.0 | 2.8 | 3.2 | |
| Sample No. 6 | | | | | | | 0.028 |
| D₅₀ value | 270 | 110 | 290 | 320 | 310 | 280 | |
| Uniformity | 2.1 | 2.0 | 3.2 | 2.0 | 2.8 | 17 | |
| Sample No. 7 | | | | | | | 0.030 |
| D₅₀ value | 320 | 110 | 180 | 320 | 310 | 280 | |
| Uniformity | 1.5 | 2.0 | 2.5 | 2.0 | 2.8 | 1.7 | |
| Sample No. 8 | | | | | | | 0.026 |
| D₅₀ value | 120 | 440 | 100 | 320 | 310 | 280 | |
| Uniformity | 1.6 | 1.5 | 3.2 | 2.0 | 2.8 | 1.7 | |
| Sample No. 9 | | | | | | | 0.025 |
| D₅₀ value | 280 | 360 | 60 | 150 | 550 | 350 | |
| Uniformity | 1.4 | 3.6 | 3.0 | 1.8 | 3.2 | 2.7 | |

Each sample was prepared as follows.

The glass raw materials having particle size distributions shown in the Table were mixed, and 38.7 g of silica sand, 17.7 g of soda feldspar, 29.3 g of weathered granite, 11.6 g of boric acid, 6.0 g of borate and 2.7 g of soda ash were then mixed to prepare a mixed raw material for a silicate glass. The weathered granite is a feldspar raw material containing feldspar such as potassium feldspar and soda feldspar in the total amount of 50% or more and constituted of quartz, a slight amount of mica, and the like. Other than the above, potassium carbonate and stannic oxide were added. The content of potassium carbonate and stannic oxide each is 2 mass % or less of the whole mixed raw material for the glass.

The mixed raw material for a silicate glass was fed into a Pt triangular crucible, and the crucible was placed in an electric furnace of 1600°C to melt the raw material. The predetermined two hours later, the crucible was taken out of the electric furnace, and the melt was taken out of the crucible, followed by gradually cooling. Density difference between the top and the bottom of the glass sample thus obtained was measured.

As a result, because in Sample Nos. 1 to 5, the raw materials within the scope of the present invention are used, the density difference thereof was small. Particularly, in Sample Nos. 1 and 2, the density difference between the top and the bottom of the glass sample was very small, and homogeneity was extremely high. Thus, when the mixed raw material for a silicate glass of the present invention is used, component segregation of the mixed raw material for a silicate glass is suppressed, and the melting rate of each raw material when melting in an early stage may be optimized. Therefore, the development of a heterogeneous layer generated on the surface of a glass melt when manufacturing may be suppressed, and melting environment is stabilized. Therefore, the present invention may enjoy high productivity.

On the other hand, because in Sample Nos. 6 to 9, raw materials having a D₅₀ value or uniformity of silica sand and feldspar outside the scope of the present invention are used, it is understood that the density difference between the top and the bottom of the glass samples is large and the uniformity is low. It may be observed from the result that component segregation and melting segregation of a mixed raw material for a silicate glass were generated in the mixed raw materials for a silicate glass of Sample Nos. 6 to 9. Once density difference is generated, homogenization is difficult, and additionally the density difference causes bubbles generated in association with the difference of a composition. As a result, stable production cannot be expected.

The mixed raw material for a silicate glass of the present invention may be suitably applied to silicate glasses containing the glass compositions (Sample a to o) shown in Table 2. It is considered that the same effect as the effect shown in Table 1 of [Examples] may be obtained in those silicate glasses.

**Table 2**

| [wt%] | | | a | b | c | d | e | f | g | |
|---|---|---|---|---|---|---|---|---|---|---|
| SiO₂ | | | 74.4 | 74.7 | 74.7 | 72.4 | 75.9 | 73.0 | 73.8 | |
| Al₂O₃ | | | 6.5 | 6.5 | 6.4 | 7.0 | 5.0 | 10.0 | 10.0 | |
| B₂O₃ | | | 10.5 | 10.5 | 10.5 | 11.0 | 11.0 | 0.1 | 0.1 | |
| Li₂O | | | | | | | | 1.7 | 3.0 | |
| Na₂O | | | 7.1 | 6.8 | 7.4 | 6.0 | 7.0 | 7.5 | 6.0 | |
| K₂O | | | 1.0 | 1.3 | 0.7 | 2.0 | | 2.7 | 2.9 | |
| CaO | | wt% | 0.3 | | | 0.5 | 1.0 | 0.5 | 0.4 | |
| MgO | | | | | | | | 3.0 | 2.4 | |
| SrO | | | | | | | | | | |
| BaO | | | | | | 1.0 | | | | |
| ZrO₂ | | | | | | | | 1.0 | 1.0 | |
| Fe₂O₃ | | | 0.020 | 0.020 | 0.020 | 0.020 | 0.020 | | | |
| SnO₂ | | | 0.19 | 0.19 | 0.19 | | | 0.49 | 0.49 | |
| Cl | | | | | | 0.08 | | | | |
| F | | | | | | | 0.10 | | | |
| Coefficient of thermal expansion | 30-380°C | ×10⁻⁷ /°C | 53.0 | 52.4 | 52.1 | 52.5 | Unmeasured | Unmeasured | Unmeasured | |
| Viscosity | Ps | °C | 527 | 526 | 525 | 525 | Unmeasured | 502 | 476 | |
| | Ta | | 571 | 571 | 570 | 570 | Unmeasured | 551 | 523 | |
| | Ts | | 788 | 789 | 791 | 785 | Unmeasured | 811 | 788 | |
| | 10⁴ | | 1157 | 1166 | 1162 | 1175 | Unmeasured | 1237 | 1190 | |
| Liquidus temperature | | °C | 970 | 964 | 967 | 930 | Unmeasured | Unmeasured | Unmeasured | |
| Liquidus viscosity | | dPa·s | 10^{5.4} | 10^{5.5} | 10^{5.4} | 10^{5.8} | Unmeasured | Unmeasured | Unmeasured | |
| Hydrolysis resistance | Hydrochloric acid consumption based on EP 8.4 glass grains method | mL/g | 0.027 | 0.027 | 0.025 | 0.027 | Unmeasured | Unmeasured | Unmeasured | |
| Acid resistance | Mass loss based on DIN 12116 | mg/ dm² | 0.4 | 0.4 | 0.4 | 0.6 | Unmeasured | Unmeasured | Unmeasured | |

| [wt%] | | | h | i | j | k | l | m | n | o |
|---|---|---|---|---|---|---|---|---|---|---|
| SiO₂ | | | 73.1 | 73.5 | 73.5 | 73.5 | 73.7 | 73.6 | 74.0 | 73.6 |
| Al₂O₃ | | | 10.0 | 7.1 | 7.1 | 7.1 | 7.0 | 7.0 | 6.6 | 7.0 |
| B₂O₃ | | | 0.1 | 10.6 | 10.6 | 10.6 | 10.6 | 10.1 | 10.3 | 10.1 |
| Li₂O | | | 3.2 | | | | | | | |
| Na₂O | | | 3.4 | 6.0 | 6.0 | 6.0 | 6.0 | 6.1 | 6.1 | 6.1 |
| K₂O | | | 5.2 | 2.2 | 2.2 | 2.2 | 2.1 | 2.2 | 2.2 | 2.2 |
| CaO | | wt% | 0.9 | 0.3 | 0.3 | 0.1 | 0.3 | 0.3 | 0.0 | 0.3 |
| MgO | | | 2.6 | | | | | | | |
| SrO | | | | | | | | | | |
| BaO | | | | | | | | | | |
| ZrO₂ | | | 1.0 | | | | | | | |
| Fe₂O₃ | | | | 0.015 | 0.015 | 0.015 | 0.015 | 0.015 | 0.014 | 0.015 |
| SnO₂ | | | 0.49 | 0.20 | | 0.20 | 0.20 | | | |
| Cl | | | | | 0.07 | 0.07 | | 0.06 | 0.07 | 0.06 |
| F | | | | | | | | | | |
| Coefficient of thermal expansion | 30-380°C | ×10⁻⁷ /°C | Unmeasured | 53.6 | 53.6 | 53.6 | 53.6 | 53.9 | 52.7 | 53.9 |
| Viscosity | Ps | °C | 485 | 522 | 522 | 522 | 522 | 524 | 523 | 524 |
| | Ta | | 531 | 568 | 568 | 568 | 568 | 570 | 570 | 570 |
| | Ts | | 778 | 795 | 795 | 795 | 795 | 794 | 797 | 794 |
| | 10⁴ | | 1199 | 1187 | 1187 | 1190 | 1194 | 1186 | 1191 | 1186 |
| Liquidus temperature | | °C | Unmeasured | 940 | 940 | 940 | 932 | 942 | 1026 | 942 |
| Liquidus viscosity | | dPa·s | Unmeasured | 10^{5.8} | 10^{5.8} | 10^{5.8} | 10^{5.8} | 10^{5.8} | 10^{5.1} | 10^{5.8} |
| Hydrolysis resistance | Hydrochloric acid consumption based on EP 8.4 glass grains method | mL/g | Unmeasured | 0.022 | 0.022 | 0.021 | 0.021 | 0.024 | 0.019 | 0.024 |
| Acid resistance | Mass loss based on DIN 12116 | mg/ dm² | Unmeasured | 0.6 | 0.6 | 0.6 | 0.5 | 0.6 | 0.5 | 0.6 |

### Industrial Applicability

A mixed raw material for a silicate glass of the present invention is a raw material suitable for the manufacturing of a tube glass, but is not limited to this. In other words, in a glass in which a heterogeneous layer on the surface of a glass melt surface by component segregation and melting segregation when melting in an early stage, of a mixed raw material is concerned, the development of the heterogeneous layer may be suppressed by using the mixed raw material for a silicate glass of the present invention.

## Claims

1. A mixed raw material for a silicate glass, comprising at least a silica sand and a feldspar, wherein with respect to the slica sand, a D₅₀ value is 100 µm or more and 300 µm or less, a uniformity represented by a value obtained by dividing a D₆₀ value by a D₁₀ value is less than 2.0, and wherein with respect to the feldspar, a D₅₀ value is 100 µm or more and 400 µm or less, and a uniformity represented by a value obtained by dividing a D₆₀ value by a D₁₀ value is 1.5 or more and less than 4.0.

2. The mixed raw material for a silicate glass according to claim 1, further comprising a boric acid, wherein with respect to the boric acid, a D₅₀ value is 100 µm or more and 500 µm or less, and a uniformity represented by a value obtained by dividing a D₆₀ value by a D₁₀ value is 1.5 or more and less than 4.0.

3. The mixed raw material for a silicate glass according to claim 1 or 2, further comprising a borax, wherein with respect to the borax, a D₅₀ value is 200 µm or more and 700 µm or less, and a uniformity represented by a value obtained by dividing a D₆₀ value by a D₁₀ value is 2.5 or more and less than 6.0.

4. The mixed raw material for a silicate glass according to any one of claims 1 to 3, further comprising a soda ash, wherein with respect to the soda ash, a D₅₀ value is 200 µm or more and 400 µm or less, and a uniformity represented by a value obtained by dividing a D₆₀ value by a D₁₀ value is 1.5 or more and less than 3.0.

5. A method for manufacturing a tube glass, comprising melting a mixed raw material for a silicate glass according to any one of claims 1 to 4, and forming the resulting melt into a tube shape.

6. The method for manufacturing a tube glass according to claim 5, wherein the mixed raw material for a silicate glass is prepared so as to contain, in mass% on an oxide basis, 70.0 to 77.0% of SiO₂, 4.5 to 11% of Al₂O₃, 0 to 11.5% of B₂O₃, 0 to 3.5% of Li₂O, 3.0 to 8.5% of Na₂O, 0 to 5.5% of K₂O, and 0 to less than 4.0% of MgO+CaO.

7. The method for manufacturing a tube glass according to claim 5 or 6, which is used in manufacturing of a pharmaceutical tube glass.
